# EUROPÄISCHE PATENTSCHRIFT

(11) **EP 1 337 767 B1**
(45) Veröffentlichungstag und Bekanntmachung des Hinweises auf die Patenterteilung: **17.01.2007**
(21) Anmeldenummer: 01994643.3
(22) Anmeldetag: 08.11.2001
(51) Int. Cl.: F16G 5/16

(54) **HOCHLEISTUNGSKEILRIEMEN**
HEAVY DUTY V-BELT
COURROIE TRAPEZOIDALE HAUTE PERFORMANCE

(30) Priorität: 18.11.2000 DE 10057382
(43) Veröffentlichungstag der Anmeldung: 27.08.2003
(73) Patentinhaber: ContiTech Antriebssysteme GmbH, 30165 Hannover (DE)
(72) Erfinder: SATTLER, Heiko, 30175 Hannover (DE)
(74) Vertreter: Finger, Karsten
(86) Internationale Anmeldenummer: PCT/EP2001/012899
(87) Internationale Veröffentlichungsnummer: WO 2002/040890

(56) Entgegenhaltungen:
- EP-A- 0 918 173
- EP-B- 0 135 710
- EP-B- 0 213 627
- WO-A-01/86169
- US-A- 4 595 387
- US-A- 4 813 920

## Beschreibung

Die Erfindung betrifft einen Hochleistungskeilriemen, einen, sogenannten Hybridkeilriemen, siehe EP 0 135 710 B1 oder US 4, 595, 387.

Eine stufenlose Drehzahl- und Drehmomentwandlung erfordert insbesondere bei automobilen Anwendungen hohe Übertragungswirkungsgrade.
Bisher bekannte Riemenanordnungen zur Transmission von Drehbewegungen zwischen (mindestens) zwei Riemenscheiben bestehen üblicherweise aus zwei endlosen Lastträgern und einer Vielzahl darauf angebrachter Blöcke (siehe z. B. EP 0 135 710 B1, EP 0 213 627 B1 und EP 0 918 173 A1). Bei den vorbekannten Riemenanordnungen sind die Lastträger in Schlitze eingepasst, die von geneigten Seitenflächen der Blöcke gegen deren mittleren Bereich verlaufen. Sowohl die Lastträger als auch die sie aufnehmenden Schlitze weisen konvexe oder konkave Abschnitte auf, wodurch sich eine in Längsrichtung der Lastträger relativ unbewegliche Ineingriffnahme ergibt. In Riemenbreitenrichtung werden die Lastträger nicht abgestützt.

Aus dem US-Patent 4,595,387 sind umschließende Stützelemente bekannt. Um sehr steife, den Riemen vollständig umgebende Stützelemente zu erhalten, müssen nach Einbringen des Riemens diese Stützelemente geschlossen werden, indem auf der Riemenaußenseite ein Querstab formschlüssig in eine entsprechende Aufnahme am Hauptteil des jeweiligen Stützelementes eingelegt wird.

Die aufgrund von Prioritätsbeanspruchung als ältere Anmeldung unter der Nummer WO-A-01/86169 nachveröffentlichte PCT-Anmeldung US 01/40682 beschreibt ebenfalls einen Hochleistungskeilriemen, der aus Stützelementen (Blöcken) und Zugträgem (Lastträgern) aufgebaut ist. Diese ältere Anmeldung beschäftigt sich im Wesentlichen mit der Positionierung des Schwerpunkts der einzelnen Stützelemente in Bezug zum jeweiligen geometrischen Mittelpunkt. Über die Positionierung der Zugträgerebene (bzw. der Zugstrangebene) in Bezug zum geometrischen Mittelpunkt bzw. zum Schwerpunkt wird nichts Näheres ausgeführt. Lediglich bei einer besonderen Ausführungsform wird verlangt, dass sich der Schwerpunkt nicht in der Zugträger-Ebene befinden soll. Zur Erzielung eines stabilen dynamischen Verhaltens erscheint jedoch die Relation von Schwerpunkt S zur Zugträger-Ebene von grundlegender Bedeutung.

Bei den sonstigen Hybridkeilriemen bekannter Bauart, siehe Oberbegriff des Anspruchs 1, mit ihrem typischerweise trapezförmigen Querschnitt befindet sich der Schwerpunkt S der Stützelemente in der Ebene der Zugstränge nur geringfügig oberhalb der geometrischen Mitte ihrer radialen Ausdehnung innerhalb eines Bereiches, der durch die äußere Ausdehnung der Zugstränge begrenzt ist. Daraus resultiert zwar ein geringer Widerstand gegen Krümmungswechsel, der durch die relativ indifferente Position der Stützelemente gegenüber dem Zugträger eingenommen wird, jedoch wird im dynamischen Betrieb eine definierte Ausrichtung der Stützelemente in radialer Richtung und damit des Zugträgers in Umfangsrichtung nicht bewirkt.

Die Aufgabe der Erfindung besteht deshalb darin, die radiale Ausrichtung der Stützelemente von Hybridkeilriemen und das dynamische verhalten bei mäßigem widerstand gegen Krümmungswechsel zu verbessern.

Diese Aufgabe wird mit den Merkmalen des Anspruchs 1 gelöst. Die Stützelemente sind derartig ausgebildet, dass ihr Schwerpunkt oberhalb der durch die Zugstränge gebildeten Ebene in einem Bereich eingestellt wird, der in radialer Richtung durch den 1-fachen bis 2,5-fachen Zugstrangradius begrenzt wird. Dabei müssen die Stützelemente - aus Riemenlängsrichtung betrachtet - nicht notwendigerweise Links/Rechts-Symmetrie aufweisen.

Durch die Einstellung des Schwerpunktes S des Stützelementes - in radialer Richtung betrachtet - in größerer Entfernung vom Drehzentrum wird gleichzeitig die Stützwirkung der Elemente erhöht, wenn mehr Material in den vom Drehzentrum entfernten Bereichen des Stützelementes angeordnet wird, wo die Biegebeanspruchung aus den axial gerichteten Druckkräften aufgrund der längeren Hebelarme an der breiteren Trapezoberseite am größten ist. Der Verformungswiderstand gegenüber den normal wirkenden Anteilen der axialen Druckkräfte bleibt gleich. Da umgekehrt weniger Material in den drehzentrumsnahen Bereichen angeordnet ist, wird der kleinstmögliche Laufradius verringert und die mögliche Getriebespreizung bei gleichbleibendem Wellendurchmesser erhöht.

Die radiale Ausrichtung der Stützelemente wird durch die Fliehkraft verbessert, indem durch Verlagerung des Stützelementschwerpunktes eine wirksame Distanz zwischen der führenden Lage des Zugträgers und dem Schwerpunkt geschaffen wird. Dieses geschieht vorteilhaft durch eine radiale Verlagerung der Zugträgeraufnahme gegenüber dem Schwerpunkt durch Veränderung der oberen und unteren Volumenanteile am Stützelement oder durch Einbettung von Verstärkungsteilen mit anderem spezifischem Gewicht als das Grundmaterial.

Im folgenden werden verschiedene Ausführungsformen von Hybridkeilriemen anhand der beigefügten Zeichnungen näher erläutert.

Die Figuren 1a, 2a, 3a und 4a zeigen jeweils einen erfindungsgemäßen Stützblock in Frontansicht aus Riemenlängsrichtung mit einem (bzw. zwei, Fig. 4a) eingelegten - im Querschnitt dargestellten - Lastträger(n);
die Figuren 1b, 2b, 3b und 4b zeigen jeweils entsprechende Stützblöcke gemäß dem Stand der Technik;
und zwar zeigen:

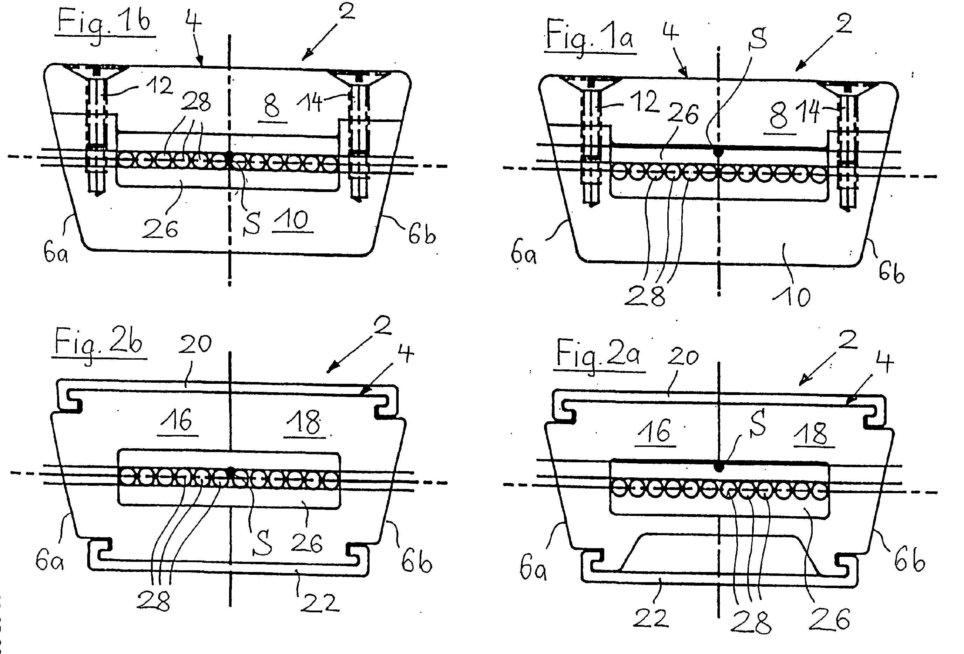

die Fig. 1a und 1b jeweils ein zweiteiliges Stützelement, horizontal geteilt;
die Fig. 2a und 2b jeweils ein zweiteiliges Stützelement, vertikal geteilt;

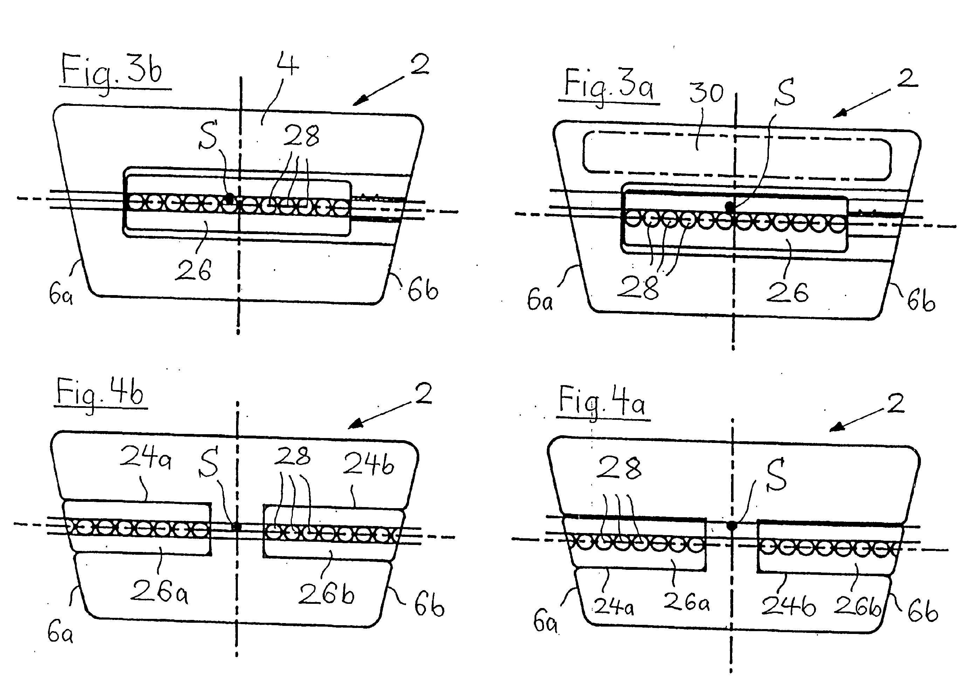

die Fig. 3a und 3b jeweils ein einteiliges Stützelement, unsymmetrisch; und
die Fig. 4a und 4b jeweils ein einteiliges Stützelement, symmetrisch.

Die abgebildeten Hybridkeilriemen 2 zeigen jeweils einen Stützblock (ein Stützelement) 4 mit in etwa trapezförmigem Querschnitt. Dabei sind zwei sich gegenüberstehende Seitenflächen 6a, 6b in der Weise zueinander geneigt, dass sie zu den Flanken einer (nicht dargestellten) Riemenscheibe korrespondieren.

Die in den Figuren 1a/1b und 2a/2b dargestellten Stützelemente 4 sind zweiteilig, und zwar weisen die Stützelemente gemäß Fig. 1a/1b jeweils ein Ober- 8 und ein Unterteil 10 auf, die mittels Schrauben 12, 14 zusammengehalten werden.
Die Stützelemente 4 gemäß Fig. 2a/2b weisen links/rechts-symmetrische Teile 16, 18 auf, die mittels Klammern 20, 22 miteinander verbunden sind.
Die in den Fig. 3a/3b und 4a/4b dargestellten Stützelemente 4 sind einteilig.

Die Stützblöcke 4 gemäß Fig. 1a/1b, 2a/2b und 3a/3b sind jeweils mit einem Lastträger 26 versehen.

Gemäß Fig. 4a und 4b ist in den beiden, sich jeweils gegenüberstehenden Seitenflächen 6a, 6b jeweils ein Schlitz 24a bzw. 24b eingebracht. Diese beiden Schlitze 24a, 24b verlaufen von den Seitenflächen 6a, 6b in Richtung auf den mittleren Bereich des Blockes 4. Der Stützblock 4 ist mit Lastträgern (Zugträgern) 26a, 26b versehen, die in die seitlichen Schlitze 24a, 24b eingelegt sind.
In den Lastträgern 2b bzw. 26a, 26b sind endlose Zugstränge 28 eingebettet.

Gemäß den Ausführungsformen solcher Hybridkeilriemen 2 nach dem Stand der Technik befindet sich der Schwerpunkt S des Stützblocks 4 innerhalb des Bereichs der Zugstränge 28 (Fig. 1b, 2b, 3b und 4b).
Erfindungsgemäß ist die Ausbildung eines - nicht notwendigerweise - symmetrischen Stützelementes 4 derart, dass der Schwerpunkt S des Elementes 4 oberhalb des durch die Zugstränge 28 gebildeten Bereichs liegt (Fig. 1a, 2a, 3a und 4a). D. h.: Erfindungsgemäß ist der Schwerpunkt S in radialer Richtung betrachtet vom Drehzentrum weg verschoben. Dadurch wird die radiale Ausrichtung durch Fliehkraft unterstützt. Auch ergibt sich ein größerer Querschnitt im Bereich maximaler Biegebeanspruchung und die Möglichkeit zur Einstellung geringerer Laufradien. Die mögliche Getriebespreizung wird damit verbessert.

In Fig. 1a ist der Schwerpunkt in radialer Richtung nach außen verlagert, da der obere, radial gesehen äußere Teil des Stützelementes aus einem Material größerer Dichte gefertigt ist als der untere.

Die Darstellung in Fig. 2a des vertikal geteilten Stützelementes zeigt die Verschiebung des Schwerpunktes radial nach außen durch Aussparungen in radial innen gelegenen Bereichen des Stützelementes, bei dem beide mit Klammern verbundenen Teile um die Symmetrielinie der Trennfuge herum zurückgenommen sind.

In Fig. 3a stellt sich eine Verlagerung des Schwerpunktes nach außen ein, indem in dem oberen Teil des Stützelementes ein Verstärkungsteil höheren spezifischen Gewichtes eingebettet ist, das gleichzeitig den Verformungswiderstand erhöht.
Weiterhin kann die Einstellung der Lage des Schwerpunktes durch vertikales Verschieben der Aussparung zur Aufnahme des Zugträgers bzw. der spezifischen Schlitze 24a, 24b zur Aufnahme der Zugträger 26a, 26b realisiert werden (Fig. 4a), so dass der obere Volumenanteil ein Übergewicht gegenüber dem unteren erzeugt.

### Bezugszeichenliste

- 2: Hybridkeilriemen
- 4: Stützblock, Block, Stützelement, Element
- 5a, 6b: Seitenflächen eines Stützelementes 4
- 8: Oberteil eines Stützelementes 4
- 10: Unterteil eines Stützelementes 4
- 12, 14: Schrauben
- 16, 18: links/rechts-symmetrische Teile eines Stützelementes 4
- 20, 22: Klammer
- 24a, 24b: Schlitz
- 26, 26a, 26b: Lastträger, Zugträger
- 28: Zugstrang, Zugstränge
- S: Schwerpunkt des Stützelementes 4
- 30: Verstärkungsteil

## Patentansprüche

1. Ein Hybridkeilriemen (2)besteht aus mindestens einem Zugträger (26; 26a, ...) sowie einer Vielzahl daran angeordneter Stützelemente (4) mit trapezförmigem Querschnitt;
- der mindestens eine Zugträger (26) weist Zugstränge (28) auf, die in einer Ebene liegen;
- die Stützelemente (4) umschließen den mindestens einen Zugträger (26), oder in mindestens eine (6a, ...) der beiden, sich jeweils gegenüberstehenden Seitenflächen (6a, 6b) der Stützelemente (4) ist ein Schlitz (24a, ...) in Richtung auf den mittleren Bereich zur Aufnahme des mindestens einen Zugträgers (26a,...) eingebracht; und
- der Schwerpunkt (S) jedes Stützelementes (4) liegt oberhalb der durch die Zugstränge (28) des mindestens einen Zugträgers (26 bzw. 26a, ...) gebildete Ebene, **dadurch gekennzeichnet, daß** der Schwerpunkt (S) in radialer Richtung vom Drehzentrum in einem Bereich liegt, der - bezogen auf die Zugstrang-Ebene - den 1 bis 2,5-fachen Radius des Zugstrangquerschnitts ausmacht.

2. Hybridkeilriemen nach Anspruch 1,
**dadurch gekennzeichnet,**
**dass** die Stützelemente (4) - in Riemenlängsrichtung betrachtet - eine symmetrische Gestalt aufweisen.

3. Hybridkeilriemen nach Anspruch 1,
**dadurch gekennzeichnet,**
**dass** die Stützelemente (4) - in Riemenlängsrichtung betrachtet - eine nichtsymmetrische Gestalt aufweisen.

4. Hybridkeilriemen nach einem der Ansprüche 1 bis 3,
**dadurch gekennzeichnet,**
**dass** die Einstellung der Schwerpunktslage durch vertikales verschieben der Aussparung zur Aufnahme des jeweiligen Zugträgers (26) realisiert wird, oder
**dass** sich die Einstellung der Schwerpunktslage durch vertikales verschieben des mindestens einen - zur Aufnahme des mindestens einen zugträgers (26a, ...) - seitlichen Schlitzes (24a, ...) ergibt.

5. Hybridkeilriemen nach einem der Ansprüche 1 bis 4,
**dadurch gekennzeichnet,**
**dass** sich die Einstellung der Schwerpunktlage durch die Auswahl des volumenverhältnisses des oberen (8) zum unteren Teil (10) des Stützblocks (4) ergibt.

6. Hybridkeilriemen nach einem der Ansprüche 1 bis 5,
**dadurch gekennzeichnet,**
**dass** die Einstellung der Schwerpunktslage durch Einbettung eines verstärkungsteils (30) in den Stützblock (4) erfolgt.

7. Hybridkeilriemen nach einem der Ansprüche 1 bis 6,
**dadurch gekennzeichnet,**
**dass** sich die Schwerpunktslage innerhalb des Stützblocks (4) durch das verhältnis der spezifischen Gewichte von verstärkungsteil (30) und umgebender Hülle ergibt.

## Claims

1. Hybrid V-belt (2) comprises at least one tensile load-bearing element (26; 26a, ...) and a plurality of support elements (4) which are arranged on the latter and have a trapezoidal cross section;
- the at least one tensile load-bearing element (26) has tension strands (28) which lie in a plane;
- the support elements (4) enclose the at least one tensile load-bearing element (26), or a slot (24a, ...) for holding the at least one tensile load-bearing element (26a, ...) is formed in the direction of the central region in at least one (6a, ...) of the two side faces (6a, 6b), which are situated opposite one another, of the support elements (4); and
- the centre of gravity (S) of each support element (4) is situated above the plane formed by the tension strands (28) of the at least one tensile load-bearing element (26 and 26a, ...),
**characterized in that** the centre of gravity (S) is situated, in the radial direction from the centre of rotation, in a region which - relative to the tension strand plane - encompasses 1 to 2.5 times the radius of the tension strand cross section.

2. Hybrid V-belt according to Claim 1,
**characterized**
**in that** the support elements (4) are of symmetrical design as viewed in the belt longitudinal direction.

3. Hybrid V-belt according to Claim 1,
**characterized**
**in that** the support elements (4) are of asymmetrical design as viewed in the belt longitudinal direction.

4. Hybrid V-belt according to one of Claims 1 to 3,
**characterized**
**in that** the position of the centre of gravity is set by vertically displacing the cut-out for holding the respective tensile load-bearing element (26), or
**in that** the position of the centre of gravity is set by vertically displacing the at least one lateral slot (24a, ...) for holding the at least one tensile load-bearing element (26a, ...).

5. Hybrid V-belt according to one of Claims 1 to 4,
**characterized**
**in that** the position of the centre of gravity is set by selecting the volume ratio of the upper part (8) relative to the lower part (10) of the support block (4).

6. Hybrid V-belt according to one of Claims 1 to 5,
**characterized**
**in that** the position of the centre of gravity is set by embedding a reinforcing part (30) in the support block (4).

7. Hybrid V-belt according to one of Claims 1 to 6,
**characterized**
**in that** the position of the centre of gravity within the support block (4) is determined by the ratio of the specific weights of the reinforcing part (30) and the surrounding casing.

## Revendications

1. Courroie trapézoïdale hybride (2) constituée de :
au moins un support de traction (26; 26a; ...) sur lequel sont disposés plusieurs éléments de soutien (4) de section transversale trapézoïdale,
- dans laquelle au moins un support de traction (26) présente des brins de traction (28) situés dans un même plan,
- les éléments de soutien (4) entourant le ou les éléments de traction (26) ou dans au moins une (6a, ...) des deux surfaces latérales (6a, 6b) mutuellement opposées des éléments de soutien (4), une fente (24a, ...) étant ménagée du côté de la partie centrale pour recevoir le ou les supports de traction (26a, ...), et
- le centre de gravité (S) de chaque élément de soutien (4) étant situé au-dessus du plan formé par les brins de traction (28) du ou des supports de traction (26 ou 26a, ...),
**caractérisée en ce que**
dans la direction radiale partant du centre de rotation, le centre de gravité (S) est situé dans une partie qui, par rapport au plan des brins de traction, correspond à 1 à 2,5 fois le rayon de la section transversale des brins de traction.

2. Courroie trapézoïdale hybride selon la revendication 1, **caractérisée en ce que** les éléments de soutien (4) ont une forme symétrique par rapport au sens de la longueur de la courroie.

3. Courroie trapézoïdale hybride selon la revendication 1, **caractérisée en ce que** les éléments de soutien (4) ont une forme non symétrique par rapport au sens de la longueur de la courroie.

4. Courroie trapézoïdale hybride selon l'une des revendications 1 à 3, **caractérisée en ce que** la position du centre de gravité est établie par déplacement vertical de la découpe de réception de chaque support de traction (26) ou **en ce que** l'établissement de la position du centre de gravité s'obtient par déplacement vertical de la ou des fentes latérales (24a, ...) qui servent à reprendre le ou les supports de traction (26a, ...).

5. Courroie trapézoïdale hybride selon l'une des revendications 1 à 4, **caractérisé en ce que** la position du centre de gravité est établie par sélection de la proportion volumique entre la partie supérieure (8) et la partie inférieure (10) du bloc de soutien (4).

6. Courroie trapézoïdale hybride selon l'une des revendications 1 à 5, **caractérisé en ce que** la position du centre de gravité est établie par incorporation d'une pièce de renfort (30) dans le bloc de soutien (4).

7. Courroie trapézoïdale hybride selon l'une des revendications 1 à 6, **caractérisé en ce que** la position du centre de gravité à l'intérieur du bloc de soutien (4) s'obtient par le rapport entre la masse spécifique de la pièce de renfort (30) et celle de l'enveloppe qui l'entoure.
